# EUROPÄISCHE PATENTSCHRIFT

(11) **EP 3 467 696 B1**
(45) Veröffentlichungstag und Bekanntmachung des Hinweises auf die Patenterteilung: **26.08.2020**
(21) Anmeldenummer: 17195493.6
(22) Anmeldetag: 09.10.2017
(51) Int. Cl.: G06F 21/51, G06F 21/56

(54) **MODUL UND VERFAHREN ZUR SICHERUNG VON COMPUTERSYSTEMEN**
MODULE AND METHOD FOR SECURING COMPUTER SYSTEMS
MODULE ET PROCÉDÉ DE SÉCURISATION DE SYSTÈMES INFORMATIQUES

(43) Veröffentlichungstag der Anmeldung: 10.04.2019
(73) Patentinhaber: DriveLock SE, 81241 München (DE)
(72) Erfinder: RIEDEL, Udo, 82061 Neuried (DE)
(74) Vertreter: Maiwald Patent- und Rechtsanwaltsgesellschaft mbH

(56) Entgegenhaltungen:
- WO-A1-03/058451
- DE-A1-102007 039 602
- GB-A- 2 463 467
- US-A- 5 983 348

## Beschreibung

### GEBIET DER ERFINDUNG

Die vorliegende Erfindung betrifft ein Sicherheitsmodul für ein Computer-System, ein Computersystem, ein computer-implementiertes Verfahren, ein Programmelement und ein computerlesbares Medium.

### HINTERGRUND DER ERFINDUNG

Computersysteme werden immer häufiger zum Ziel von Angriffen über sogenannte Mal- oder Ransomware, auch "Viren" genannt. Solche Schadsoftware wird in Form von bösartigen Applikationen auf einen Computer gebracht und dort entweder durch unachtsame Benutzer oder durch die Ausnutzung von Fehlern oder Hintertüren in einem Betriebssystem oder anderer Software zur Ausführung gebracht, um anschließend Schaden auf dem betroffenen System anzurichten.

Als Beispiel sei hier auf einen Hackerangriff mittels Schadsoftware (mit Namen "Stuxnet", ein "Computerwurm") im Iran aus dem Jahre 2010 hingewiesen. Hierbei wurde Steuersoftware eines SCADA-Systems (engl., "Supervisory Control and Data Acquisition") für Zentrifugen in einer Urananreicherungsanlage in Natanz gezielt manipuliert. Die Umdrehungsgeschwindigkeit der Zentrifugen wurde hierdurch nicht mehr richtig gesteuert. Die Umdrehungsgeschwindigkeit wurde zu hoch. Die Zentrifugen gerieten außer Kontrolle und wurden dadurch mechanisch beschädigt. Angereichertes Uran trat aus. Dies zeigt, wie gefährlich Schadsoftware werden kann.

Zum Schutz vor solchen Angriffen wird sogenannte "Anti-Malware-Software" eingesetzt, um bösartige Dateien (und Software) auf einem Computer zu erkennen. Solche Software bedient sich eines Regelwerks, auch "Blacklist" genannt, um zu erkennen, ob eine Datei identisch zu einer dem Hersteller der Anti-Malware-Software bekannten Malware ist. Ist dies der Fall, wird der Zugriff auf die entsprechende Datei blockiert oder die Datei gelöscht.

Alternativ gibt es auch Schutz-Software, die manchmal als Applikationskontrolle bezeichnet wird. Auch hier wird ein Regelwerk benutzt, das in diesem Zusammenhang "Whitelist" genannt wird, da nur die in dieser "weißen Liste" befindlichen Applikationen ausgeführt werden dürfen.

Nachteilig ist bei Blacklisting, dass man die Schadsoftware bereits kennen muss, was bei speziell gefertigten Angriffen, wie dem im Beispiel genannten Stuxnet, praktisch zum Zeitpunkt des Angriffes nie der Fall ist. Nachteilig beim Whitelisting ist, dass diese unflexibel ist: ein Wechsel zu einer anderen, legitimen Software (z.B. im Rahmen einer Softwareaktualisierung) ist ohne eine vorangehende Aktualisierung der Whitelist nicht möglich. Dies kann beim Betrieb eines Netzwerkes von einer Vielzahl (z.B. hunderte, tausende oder gar zehntausende) von Computersystemen einen erheblichen Verwaltungsaufwand nach sich ziehen.

Die GB 2463467 zeigt ein Malware-Erkennungsverfahren, das in einem Computer implementiert ist. Das Erkennungsverfahren bestimmt, ob eine Datei mit einer gültigen digitalen Signatur verknüpft ist, und wenn dies der Fall ist, wird gemäß dem Verfahren verifiziert, ob die Signatur zu einer vertrauenswürdigen Quelle gehört. Wenn die Signatur zu einer vertrauenswürdigen Quelle gehört, wird kein Malware-Scan der Datei durchgeführt. Wenn die Signatur jedoch nicht als zu einer vertrauenswürdigen Quelle gehörend verifiziert werden kann, wird ein Malware-Scan durchgeführt. Der Schritt des Verifizierens, ob die Signatur zu einer vertrauenswürdigen Quelle gehört, kann auf einer Datenbank von vertrauenswürdigen öffentlichen Schlüsseln basieren. Es wird dann bestimmt, ob ein öffentlicher Schlüssel, der zum Verifizieren der digitalen Signatur verwendet wird, in der Datenbank enthalten ist. Der Schritt des Bestimmens, ob die Datei mit einer gültigen digitalen Signatur verknüpft ist, kann das Verwenden einer Anwendungsprogrammierschnittstelle (API) eines Betriebssystems des Computers, wie z. B. der WinVerifyTrustEx-API, umfassen.

### ZUSAMMENFASSUNG DER ERFINDUNG

Es ist eine Aufgabe der Erfindung, ein alternatives Verfahren oder System zur Sicherung von Computersystemen bereitzustellen, so dass zumindest ein Teil der oben genannten Nachteile zumindest abgemildert werden kann.

Diese Aufgabe wird durch den Gegenstand des unabhängigen Patentanspruchs gelöst. Weiterbildungen der Erfindung ergeben sich aus den Unteransprüchen und der folgenden Beschreibung.

Die Erfindung ist gemäß den beigefügten Ansprüchen definiert.

Ein erster Aspekt der Erfindung betrifft ein Sicherheitsmodul für ein Computer-System, umfassend:
eine Eingangsschnittstelle zum Erfassen mindestens eines Merkmals einer Datei;
eine Prüf-Logik, die eingerichtet ist, anhand mindestens eines Merkmals zu überprüfen, ob die Datei eine Ähnlichkeit zu einer oder mehreren Referenzdateien aufweist, wobei die eine oder mehreren Referenzdateien als vertrauenswürdig eingestuft sind und wobei die Datei verschieden ist von den einen oder mehreren Referenzdateien;
wobei die Prüf-Logik weiter eingerichtet ist, eine Ausführung der Datei auf einem Computer-System nur dann zu genehmigen, wenn die Überprüfung zu dem Ergebnis kommt, dass eine Ähnlichkeit zu der einen oder mehreren Referenzdateien vorliegt.

Unter "vertrauenswürdig" sind insbesondere solche Dateien zu verstehen, die keine Schadsoftware enthalten und/oder zur Ausführung auf dem Computersystem genehmigt sind. Die Datei ist eine Darstellungsform von Instruktionen, durch die das Computersystem eine gewünschte Funktion bewerkstelligen kann. Die Whiteliste wird von den Referenzdateien gebildet. Das Sicherheitsmodul implementiert somit ein Whitelisting mit Vorhersage (engl., "predictive whitelisting"). Es können somit auch Varianten von vertrauenswürdigen Dateien zur Ausführung zugelassen werden, sofern diese eine definierte Ähnlichkeit zu den vertrauenswürdigen Referenzdateien gemäß der Whiteliste aufweisen. Dies erlaubt es insbesondere mit geringem Verwaltungsaufwand Software-Updates auf einer Vielzahl von Rechnern zu installieren und auszuführen. Ein Vorteil gegenüber einem klassischen Virenscanner ist, dass es mit dem hier vorgeschlagenen prediktiven Whitelisting nicht erst zu einem Angriff kommen muss, den man bemerken muss, damit die entsprechende Schadsoftware von dem Virenscanner überhaupt erkannt werden kann. Somit kann man sich mit dem hier vorgeschlagenen Modul insbesondere gegen gezielte, d.h. maßgeschneiderte, Angriffe (wie etwa Stuxnet), wie sie oft auf Industrieanlagen oder Bankautomaten vorkommen, besser schützen als mit den Virenscannern.

Gemäß einer Ausführungsform der Erfindung werden die eine oder mehreren Referenzdateien durch eine Datei-Scan-Einheit im Vorfeld durch eine Bestandsaufnahme auf dem Computer-System ermittelt. Hierbei wird die Annahme gemacht, dass die dabei erfassten Dateien vertrauenswürdig sind. Hierdurch kann eine auf das vorliegende Computersystem zugeschnittene Menge an Referenzdateien definiert werden.

Gemäß einer Ausführungsform ist die Prüf-Logik eingerichtet, die Datei zu einer neuen Referenzdatei zu deklarieren, wenn das Ergebnis ergibt, dass eine solche Ähnlichkeit vorliegt. Hierdurch ist das Modul in der Lage fortlaufend zu "lernen" was als vertrauenswürdig anzusehen ist.

Gemäß einer Ausführungsform umfasst das Sicherheitsmodul eine weitere Prüf-Logik, die der o.g. Prüf-Logik vorgelagert ist, und die eingerichtet ist, eine Identität der Datei mit einer oder mehreren Referenzdateien zu prüfen, und wobei die Überprüfung durch die Prüf-Logik nur dann erfolgt, wenn die Prüfung durch die weitere Prüf-Logik zu dem Ergebnis kommt, dass keine Identität vorliegt. Hierdurch kann eine Auslastung der auf Ähnlichkeit prüfenden Prüflogik verringert werden.

Gemäß einer Ausführungsform der Erfindung erfolgt die Überprüfung der Identität auf Grundlage eines Hashwertes der Datei und eines Hashwertes der ein oder mehreren Referenzdateien.

Erfindungsgemäß erfolgt die Überprüfung der Ähnlichkeit durch eine Berechnung eines Ähnlichkeitsmaßes, wobei das Ähnlichkeitsmaß eine Ähnlichkeit des mindestens einen Merkmals mit entsprechend einem Merkmal oder mehreren Merkmalen mindestens einer der Referenzdateien quantifiziert.

Gemäß einer Ausführungsform der Erfindung ist die Prüf-Logik so eingerichtet, das Ähnlichkeitsmaß mit einem Schwellwert zu vergleichen, um so zu dem Ergebnis zu gelangen. Diese Schwellwert-Bemessung hat sich als besonders schnell erwiesen.

Gemäß einer Ausführungsform ist die Prüf-Logik eingerichtet als ein Maschineller-Lern-Algorithmus, basierend auf:
i) einem linearen Modell,
ii) einem nichtlinearen Modell,
iii) einem nichtparametrischen Modell,
iv) Support Vector Machines ["SVM"],
v) einem probabilistischen Modell.

Gemäß einer Ausführungsform basiert das zumindest eine Merkmal auf einem der nachfolgend genannten Punkte i) bis v) oder einer Kombination aus:
i) digitaler Signatur,
ii) Metadaten,
iii) Abhängigkeitsgraph von abhängigen Dateien,
iv) Liste von aufgerufenen Funktionen;
v) einem oder mehreren Benutzerinterface-Elementen.

Gemäß einer Ausführungsform umfasst das Sicherheitsmodul mindestens eine Benutzer- oder Administrator-Schnittstelle, eingerichtet, um durch den Benutzer oder Administrator ein Ausführen der Datei zu erzwingen, obwohl die Prüf-Logik zu dem Ergebnis kommt, dass keine Ähnlichkeit vorliegt. Dies erlaubt es, die Flexibilität des Moduls zu verbessern.

Ein zweiter Aspekt der Erfindung betrifft ein Computersystem mit einem Sicherheitsmodul gemäß einem der vorangehenden Ausführungsformen.

Ein dritter Aspekt der Erfindung betrifft ein computer-implementiertes Verfahren, umfassend die Schritte:
- Erfassen mindestens eines Merkmals einer Datei;
- Anhand mindestens eines Merkmals überprüfen, ob die Datei eine Ähnlichkeit zu einer oder mehreren Referenzdateien aufweist, wobei die eine oder mehreren Referenzdateien als vertrauenswürdig eingestuft sind und wobei die Datei verschieden ist von den einen oder mehreren Referenzdateien;
- Genehmigen einer Ausführung der Datei auf einem Computer-System nur dann, wenn die Überprüfung zu dem Ergebnis kommt, dass eine Ähnlichkeit zu der einen oder mehreren Referenzdateien vorliegt.

Gemäß einer Ausführungsform umfasst das den Schritt:
- Im Vorfeld ermitteln der einen oder mehreren Referenzdateien durch eine Bestandsaufnahme auf dem Computer-System.

Gemäß einer Ausführungsform umfasst das Verfahren den Schritt:
- vor dem Schritt des Überprüfens der Ähnlichkeit, prüfen einer Identität der Datei mit der einen oder mehreren Referenzdateien, und wobei die Ähnlichkeits-Überprüfung nur dann erfolgt, wenn die Identitäts-Prüfung zu dem Ergebnis kommt, dass keine Identität vorliegt.

Gemäß einer Ausführungsform umfasst das Verfahren den Schritt:
- Erzwingen eines Ausführens der Datei, obwohl in dem Überprüfungsschritt keine Ähnlichkeit festgestellt wurde.

Ein vierter Aspekt der Erfindung betrifft ein Programmelement, das, wenn es auf zumindest einem Datenverarbeitungssystem ausgeführt wird, das Datenverarbeitungssystem anleitet, das Verfahren gemäß einem der o.g. Ausführungsformen durchzuführen.

Ein fünfter Aspekt der Erfindung betrifft ein computerlesbares Medium, auf dem das Programmelement gespeichert ist.

### KURZE BESCHREIBUNG DER ZEICHNUNGEN

FIG. 1 zeigt ein schematisches Blockdiagramm eines Computersystems;
FIG. 2 zeigt ein schematisches Blockdiagramm eines Sicherheitsmoduls für das Computersystem in FIG. 1;
FIG. 3 zeigt ein Flussdiagramm für ein Lernverfahren;
FIG. 4 zeigt ein Verfahren zum Prüfen einer Ähnlichkeit von Dateien mit bereits bekannten Dateien; und
FIG. 5 zeigt ein Verfahren für eine Benutzerinteraktion im Rahmen einer Ähnlichkeitsprüfung für Dateien.

### DETAILLIERTE BESCHREIBUNG DER ERFINDUNG

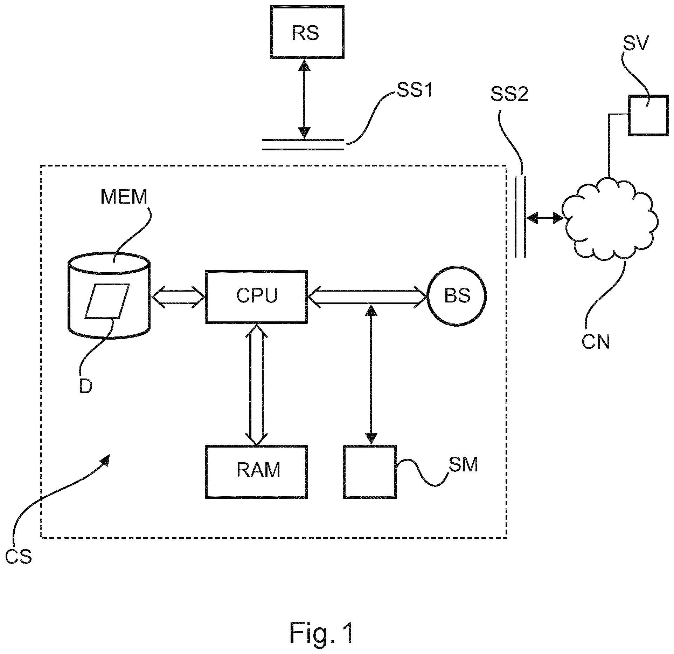

FIG. 1 zeigt ein schematisches Blockdiagramm eines Computersystems CS zur elektronischen Daten- oder Signalverarbeitung.

Bei dem Computersystem CS kann es sich um einen Allzweckrechner, wie zum Beispiel einen PC ("personal computer"), Laptop o. Ä. handeln. Alternativ kann das Computersystem CS auch ein Großrechner und/oder ein Server sein. Alternativ kann es sich bei dem Computersystem auch um ein kleineres Handgerät handeln, wie zum Beispiel ein Smartphone, ein Tablet o. Ä.

Das Computersystem CS kann eingesetzt werden für Internetanwendungen, Bild- oder Videoverarbeitung, Computerspiele, u. Ä., wie es oft im häuslichen Bereich geschieht. Anwendungen in Betrieben oder Ämtern umfassen z.B. Verarbeitung von Dokumenten, Tabellenkalkulation, Buchhaltung, etc.

Alternativ kann das Computersystem CS aber auch zur Steuerung von Industrieanlagen, z.B. Elektrizitätswerken o. Ä. oder zur Überwachung von Flugverkehr, Steuerung von Robotik-Systemen, o.Ä., genutzt werden.

Alternativ hierzu und im Besonderen vorgesehen sind auch eingebettete (engl., "embedded") Systeme CS, die im Gegensatz zu Allzweckcomputersystemen, wie oben beschrieben, zu spezielleren Zwecken konzipiert und eingesetzt werden und oft kleiner dimensioniert sind und/oder für Echtzeitbetrieb ausgelegt sind. Das Computersystem CS als eingebettetes System kann verschiedene Überwachungs-, Steuerungs- und Regelfunktionen in der Daten- oder Signalverarbeitung übernehmen. Einsätze sind in vielerlei Geräten oder Maschinen vorgesehen, wie in der Medizintechnik oder in Haushaltsgeräten, wie beispielsweise in Waschmaschinen, Kühlschränken, Fernsehern, aber auch in Kraftfahrzeugen, Flugzeugen, Schiffen, usw. Insbesondere kann das eingebettete Computersystem CS in einem Geldautomaten (d.h., eine Bargeldausgabemaschine), der von Banken zum Abheben oder Hinterlegen von Bargeld oder Cheques bereitgestellt werden. In den oben genannten industriellen Anwendungen oder in Anwendungen in den o. g. Geräten (Geldautomat, Kühlschrank, Fahrzeug, etc.) ist das Computersystem CS zwar vorzugsweise ein eingebettetes System, aber nicht notwendigerweise eingebettet, was bedeutet, dass auch andere Architekturen vorgesehen sein können.

Das Computersystem CS in all den oben genannten Ausführungsformen umfasst als grundlegende Komponente einen elektronischen Prozessor CPU mit einem Arbeitsspeicher RAM. In manchen, aber nicht notwendigerweise allen, Ausführungsformen ist ein Betriebssystem BS vorgesehen, das als Programm auf dem Computersystem läuft, um grundlegende Verwaltungsfunktionen durchzuführen. Insbesondere übernimmt das Betriebssystem die Verwaltung von angeschlossenen Ressourcen RS, die über eine geeignete Schnittstelle SS1 mit dem Computersystem kommunizieren können. Insbesondere kann in eingebetteten Systemen das Computersystem CS als ein Mikrocontroller (MC) eingerichtet sein. In einem MC ist im Allgemeinen (i.A.) der Prozessor CPU und RAM in eine Einheit integriert. Alternativ oder zusätzlich kann die CPU als DSP (engl., "digital signal processor"), oder GPU (engl., "graphical processing unit") oder FGPA (engl., "field programmable gate array"), eingerichtet sein.

Bei den Ressourcen RS kann es sich um interne Ressourcen (Schnittstellen für Daten, Festplatte, Graphikarte, Netzwerkkarte, etc.), aber auch um externe Ressourcen, wie zum Beispiel Drucker, Router oder andere Geräte handeln, die an das Computersystem über eine geeignete Schnittstelle SS1 angeschlossen sind.

Bei den Ressourcen RS kann es sich auch um externe Aktuatoren handeln, die über das Computersystem gesteuert werden, um eine mechanische oder elektrische Aktion zu bewirken. Dies trifft insbesondere zu, wenn das Computersystem als eingebettetes System vorgesehen ist. Beispiele hierzu sind das Steuern von Elementen des Geldautomaten, der Waschmaschine oder das Steuern von Fingerbewegungen einer Roboterhand oder von sonstigen Werkzeugen oder Stellgliedern.

Über dieselbe oder eine andere Schnittstelle SS2 ist das Computersystem in der Lage, über ein Kommunikationsnetzwerk CN mit externen Vorrichtungen, Maschinen, Geräten oder anderen Computern SV (Servern, etc.) zu kommunizieren. Diese Kommunikation kann zum Beispiel über ein Ethernet-Protokoll oder anders erfolgen. Die Kommunikation mit den externen Ressourcen RS erfolgt zum Beispiel im industriellen Bereich über Profi-Bus oder CAN-Bus oder ähnliche Kommunikationsprotokolle. Durch diese Fähigkeit zu Fern oder Nah-Kommunikation können die entsprechenden Geräte, in denen die entsprechenden Computersysteme CS integriert sind, kommunikativ vernetzt werden, entweder untereinander oder mit anderen Computern, Servern etc., um so ein "Internet der Dinge" zu konstruieren. Die so vernetzten Geräte werden dadurch zu "smarten" Geräten, d.h., die Computersysteme CS bewirken, dass die Geräte Daten empfangen oder senden können, und/oder zur Verarbeitung von diesen Daten fähig sind.

Die verschiedenen Funktionen und Aufgaben bewältigt das Computersystem CS, indem ein Programm D in Form einer Datei in das Computersystem CS geladen wird und in einen Speicher MEM abgelegt wird oder direkt in die RAM geladen wird. Bei dem Speicher kann es sich um einen internen Speicher, wie zum Beispiel eine Festplatte oder kleinere Speichermodule in eingebetteten Systemen handeln. Der Speicher MEM kann aber auch extern in Form einer Datenbank/Server SV oder andere Speicherressource angelegt sein, über die das Computersystem mittels der Schnittstelle SS2 kommuniziert.

Die Kommunikation zwischen dem Computersystem und externen Speicherressourcen, etc., kann hierbei im Übrigen kabellos oder in einer verkabelten Weise erfolgen. Der Speicher MEM kann auch als USB-Stick eingerichtet sein, der über eine USB-Schnittstelle SS1 an den Rechner CS angeschlossen ist und so die auszuführende Datei in das Rechensystem CS geladen wird.

Bei der Datei D handelt es sich um (organisierte) Informationen. Jede Datei hat einen Namen. Die Information verkörpert das auszuführende Programm. Mit anderen Worten: die Information stellt, in einer geeigneten Darstellung, Instruktionen dar, die über den Prozessor CPU des Computersystems ausgeführt werden, um so die gewünschten Steuer- oder sonstige Funktionen zu verwirklichen. Wie oben bereits erwähnt, werden die Information/Instruktionen in einer solchen Datei, die durch Kompilierung gewonnen wurde, in maschinenlesbarer Form dargestellt. Insbesondere handelt es sich bei den Dateien um sog. "executables", also ausführungsfähige Dateien, die Instruktionen enthalten, im Gegensatz zu "reinen Daten", wie Bilder oder Videodateien, die selbst als Eingabe für ausführbare Dateien dienen. In manchen Betriebssystemen BS, die hier beispielsweise vorgesehen sind, wie z.B. Windows™ von der Firma Microsoft oder Linux/Unix, wird diese Ausführbarkeit durch den Dateinamen ausgedrückt, z.B. durch die Endung ".exe". Oftmals wird diese Information durch eine Kompilierung bewirkt, bei der ein Quellcode über einen Kompiler in einen Maschinencode umgewandelt wird. Die Darstellung der Information in der Datei erfolgt insbesondere über eine geeignete Codierung, wie zum Beispiel Binärcode oder Hex-Code oder anderweitige Codes. Alternativ kann es sich aber bei der Datei D selbst um ein Stück Quellcode handeln, der dann über ein Interpreter-System Zeile für Zeile erst während der Ausführung durch die CPU in Maschinensprache umgesetzt wird und dann zur Ausführung gebracht wird. Beide Alternativen für die Datei D sind hierbei vorgesehen.

Bei der Ausführung des Programms, das durch die Datei dargestellt wird, werden über das Betriebssystem BS ein Adressraum zur Verfügung gestellt und insbesondere ein Prozess mit einer bestimmten Prozess-ID (Identifikationsnummer) generiert. Bei dem Adressraum handelt es sich um Speicherzellen in dem Arbeitsspeicher RAM, in denen Zwischen- oder Enddaten aber auch Instruktionen geladen werden, während die CPU die Instruktionen der Datei D verarbeitet.

Im Folgenden wird der Begriff "Datei" und "Software" oder "Programm" synonym verwandt. Mit dem Verständnis, dass eine Datei ein Datum darstellt, das eine gewünschte Software/Programm verkörpert, wie oben beschrieben. Jede (ausführbare) Datei definiert eine Software und jede Software lässt sich als Datei auffassen. Eine Datei ist somit eine Organisationsform von funktional zusammengehörigen Instruktionen, durch die ein bestimmtes Verhalten oder Funktionen auf dem zugehörigen System CS verwirklicht werden können. Die Instruktionen müssen natürlich so beschaffen sein, dass diese von dem vorliegenden System CS, insbesondere dem Prozessor CPU, verstanden werden können. Mithin sind also die Dateien D i.A. verschieden für verschiedene Typen von Computersystemen CS.

Das Computersystem CS umfasst ein Sicherheitsmodul SM, das das Computersystem vor Schadsoftware (engl., "Malware", Ransomware, Worms, etc.) schützen soll. Bei Schadsoftware oder "Viren", handelt es sich um absichtlich konzipierte (oder gelegentlich auch zufällig entstandene) Software, oder Teile davon, die Schäden an den Ressourcen RS und/oder dem Computersystem CS selber hervorrufen soll. Zum Beispiel kann BIOS Information korrumpiert werden. Ein weiteres Beispiel ist, dass durch Schadsoftware ein Geldautomat so manipuliert werden kann, dass an Unbefugte Bargeld ausgegeben wird. In anderen Fällen kann die Schadsoftware Datenklau erwirken, z.B. durch unerlaubtes Entwenden, Kopieren, Zerstören oder Verschlüsseln, von privaten oder geheimen Daten, die auf dem Computersystem CS gespeichert sind.

Die Funktionsweise des hier vorgeschlagenen Sicherheitsmoduls SM kann man grob als "prädiktives Whitelisting" charakterisieren. Mit anderen Worten implementiert das hier vorgeschlagene Sicherheitsmodul SM Applikationskontrolle mit Vorhersagefunktion. Im Gegensatz zum Blacklistingverfahren werden in dem hier vorgesehenen Whitelistingverfahren ein oder mehrere vertrauenswürdige Dateien bzw. Software definiert und in einer geeigneten Datenstruktur, wie zum Beispiel einer Liste L, gespeichert. "Vertrauenswürdig" bedeutet in diesem Kontext, dass die entsprechend identifizierten Dateien auf dem Computersystem CS ausgeführt werden dürfen. Es besteht hier die Annahme, dass die vertrauenswürdigen Dateien, keine Schadsoftware enthalten. Nur Software und entsprechende Dateien, die auf dieser Whiteliste L erfasst sind, dürfen auf dem Rechner zur Ausführung gebracht werden. Im Gegensatz zu herkömmlichen Whitelistingverfahren ist allerdings das hier vorgeschlagene Sicherheitsmodul SM flexibler gestaltet, indem es auch hinreichend ähnliche Software zur Ausführung zulässt. In anderen Worten, Software, die als hinreichend ähnlich zu den bereits als vertrauenswürdig anerkannten Software oder Dateien, die in der Whiteliste gespeichert sind, erkannt wird. Im Gegensatz zu einem Blacklisting, das hier nicht vorgesehen ist, wo versucht wird, Schadsoftware im Vorfeld zu erkennen, geht das hier vorgeschlagene Modul SM einen anderen Weg, der "invers" zu dem Blacklisting ist. Insbesondere werden eben die bereits bekannte(n) Software oder Dateien verlistet und es wird versucht, zu jeder neu geladenen Software D festzustellen, ob diese in der Liste aufgelistet ist oder hinreichend ähnlich zu einer Datei von der Whiteliste ist. Eine Erkennung von Schadsoftware als solche ist daher bei dem hier vorgeschlagenen prediktiven Whitelisting nicht vorgesehen. Es wird umgekehrt der Weg beschritten, indem Identität oder Ähnlichkeit zu bekannten, vertrauenswürdigen Dateien/Software erkannt wird.

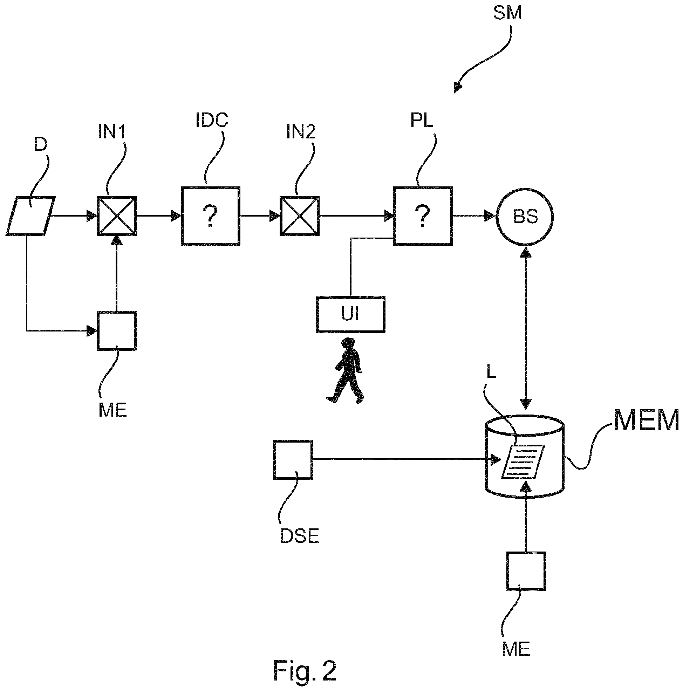

Mit Verweis auf FIG. 2 wird ein schematisches Blockdiagramm des hier vorgeschlagenen Sicherheitsmoduls SM dargestellt. Anhand dieser Zeichnung soll die Funktionsweise des Sicherheitsmoduls SM näher dargestellt werden.

Das Sicherheitsmodul SM kann selbst als Software konzipiert sein, die auf dem Computersystem CS zum Einsatz kommt. Das Sicherheitsmodul kann als ein oder mehrere Dateien ("Softwarepaket") auf einem Datenträger gespeichert sein, z.B. auf einer CD oder einem "Memory Stick", um so auf das zu schützende System CS aufladbar zu sein. Alternativ oder zusätzlich kann das Sicherheitsmodul SM als Softwarepaket über ein Kommunikationsnetzwerk, wie z.B. das Internet, auf das Computersystem über die Kommunikationsschnittstelle SS2 heruntergeladen werden. Es sind aber auch Ausführungsformen vorgesehen, in denen das Sicherheitsmodul als festverdrahteter oder programmierbarer Chip ausgebildet ist. Der Chip kann dann in ein bestehendes Computersystem CS, zum Beispiel in ein eingebettetes System einer Waschmaschine, Geldautomat oder Ähnliches (o.Ä.) eingebracht werden.

Mit dem vorgeschlagenen Sicherheitsmodul SM können also insbesondere auch "smarte" Geräte, wie z.B. Haushaltsgeräte, wie die vorgenannten Kühlschränke, Waschmaschinen, oder gewerblichen Geräte wie Geldautomaten etc., die mittels der Kommunikations-Schnittstelle SS2 über die Ferne angesprochen werden können, geschützt werden. Zum Beispiel erlaubt das Sicherheitsmodul SM, dass ein Hersteller eine aktualisierte Steuerversion für das Gerät über das Internet und die Schnittstelle SS2 auf das Gerät aufspielen kann. In diesem Fall würde zwar die aktualisierte Steuerversion noch nicht auf der Whiteliste L erscheinen, allerdings ist das hier vorgesehene Steuerungsmodul trotzdem so eingerichtet, dass dieses dann eine hinreichende Ähnlichkeit mit der bereits bestehenden Software in der Whiteliste L erkennt und daher die Ausführung zulassen würde. Das hier vorgeschlagene Sicherheitsmodul SM würde es also einem potenziellen Angreifer erschweren, wenn nicht sogar unmöglich machen, eine Schadsoftware auf das Computersystem CS des Geräts aufzuspielen. Die Information in der Whiteliste L kann ggfs. verschlüsselt gehalten werden, um es einem Angreifer zu erschweren herauszubekommen, welche Art von Software erlaubt ist. Die Interaktion zwischen Prüf-Logik PL und Liste L erfordert in dieser Ausführungsform somit eine zwischengeschaltete Entschlüsselung, um insbesondere die Merkmale auszulesen. Außerdem verhindert eine solche Verschlüsselung der List L, dass sich ggfs. Schadsoftware selber zu der Liste L hinzufügen kann.

Die Überwachungs- oder Wächterfunktion des hier vorgeschlagenen Sicherheitsmoduls SM wird dabei wie folgt ausgeführt: In einer Ausführungsform, allerdings nicht in allen Ausführungsformen, umfasst das Sicherheitsmodul eine zweistufige Sicherheitskomponente. Diese besteht aus einer ersten Prüfungslogik, die hier als ID-Checker IDC bezeichnet werden soll, und die zur Identitätsüberprüfung der Datei D mittels der Whiteliste eingerichtet ist. Die zweite Komponente wird gebildet durch eine zweite, dem ID-Checker IDC nachgelagerte, Prüf-Logik PL die auf Ähnlichkeit der neuen Datei D mit Dateien in der Whiteliste L prüft.

Genauer formuliert, wird die neu ausführende Datei D von einer Eingangsschnittstelle IN1 des ID-Checkers IDC erfasst. Dies geschieht insbesondere, wenn ein Benutzer die Ausführung dieser neu geladenen Datei D fordert, zum Beispiel durch Mausklick oder anderweitig. Als Reaktion auf diese Anforderung bereitet das Betriebssystem BS schon einmal eine Prozessallokierung für die neu auszuführende Datei D vor. Der Prozess wird allerdings zunächst noch nicht voll alloziert, sondern die Allokierung wird von dem Sicherheitsmodul SM über geeignete Schnittstellen in dem Betriebssystem BS blockiert. Der IDC-Checker führt dann einen ID-Check aus, um festzustellen, ob die neue Software bereits auf der Liste der bekannten gutartigen Dateien L verlistet ist. Bei der Whiteliste L muss es sich nicht notwendigerweise um eine Liste im eigentlichen Sinne handeln, sondern die Whiteliste L kann auch z. B. als verzeigerte Datenstruktur oder als Datenbankeinträge dargestellt werden.

Der ID-Überprüfung durch den ID-Checker IDC kann insbesondere über eine Hashfunktion erfolgen. Bei der Hashfunktion wird die Datei D als Zeichenkette betrachtet und mathematisch abgebildet auf eine Zahl, die charakteristisch für diese Zeichenkette ist. Bei den Hashfunktionen, die hier vorgesehen sind, kann es sich zum Beispiel um SHA1, SHA2 oder andere Hashfunktionen handeln. Codierungsfunktionen, die verschieden sind von Hashfunktionen, sind hier auch vorgesehen. Alternativ kann es sich einfach um Seriennummern handeln, die in der Datei codiert sind.

Der Hashwert der neuen Datei D wird durch den ID-Checker IDC mit entsprechenden Hashwerten der vertrauenswürdigen Dateien in der Liste L verglichen. Wird eine Übereinstimmung festgestellt, so handelt es sich bei der Software D um eine bekannte Software und das Sicherheitsmodul SM gibt eine Ausführung der Software D dann frei. Das Betriebssystem kann also insbesondere die Adressspeicher und Prozessallokierung vollenden und die Software D kann zur Ausführung gebracht werden.

Stellt der ID-Checker IDC allerdings fest, dass keine Identität vorliegt, werden weitere Merkmale über die Datei D über eine zweite Schnittstelle IN2 an die zweite Prüfungsinstanz, d. h. die Prüfungslogik PL, weitergegeben. Ein Merkmalsextraktor ME extrahiert hierzu ein oder mehrere Merkmale aus der Datei. Die Prüfungslogik verarbeitet dann diese Merkmale. Insbesondere werden die Merkmale mit korrespondierenden Merkmalen der Dateien in der Whiteliste L verglichen. Der Vergleich erfolgt vorzugsweise über ein Ähnlichkeitsmaß. Vorzugsweise wird der Hashwert nicht für die Ähnlichkeitsprüfung durch die Prüflogik verwendet.

Das Ähnlichkeitsmaß wird berechnet durch die zweite Prüflogik, basierend auf den Merkmalen der neuen Datei und Merkmalen von Dateien aus der Whiteliste L. Das Ähnlichkeitsmaß kann dann zum Beispiel mit einem vorher einstellbaren Schwellwert verglichen werden. Wenn zum Beispiel dieser Schwellwert überschritten ist, d. h. wenn die Ähnlichkeit groß genug ist, wird ein Signal an das Betriebssystem BS geschickt, um eine Ausführung der Datei zu erlauben und insbesondere die Prozessallokierung zu vollenden.

Es ist hierbei zu verstehen, dass in einfacheren, insbesondere in eingebetteten Systemen, ein Betriebssystem BS in der beschriebenen Form nicht notwendig ist. Zum Beispiel ist die oben beschriebene Kommunikation zwischen Sicherheitsmodul SM und dem Betriebssystem zur Freigabe der Programmabarbeitung im Rahmen einer Prozessallokierung ist nicht notwendig. In diesem Fall kann z.B. das Sicherheitsmodul SM als Schalterglied dem auszuführenden Programm D vorgelagert werden als lineare Kette. D. h., nur wenn die Prüf-Logik PL zu dem Ergebnis kommt, dass eine Ähnlichkeit vorliegt, wird ein Signal geliefert, was dann die Ausführung des neu zu ladenden Programms D erlaubt.

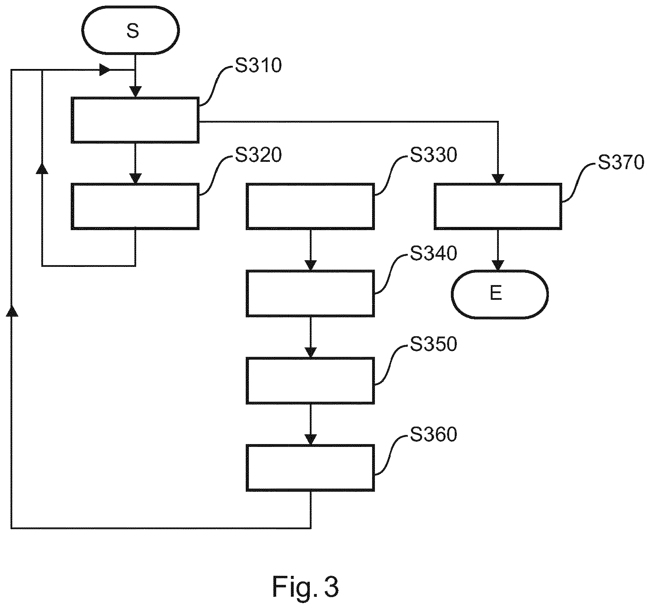

Die extrahierten Merkmale, die im Übrigen unten mit Verweis auf FIG. 3 bis 5 näher beschrieben werden, werden vorteilhafterweise so gespeichert, dass eine Zuordnung zu den einzelnen Dateien in der Whiteliste L möglich ist. Das kann zum Beispiel durch eine Verzeigerung erfolgen. Vorteilhafterweise wird die Whiteliste, L und/oder die Merkmale lokal auf dem Computersystem CS in einen Speicher, zum Beispiel in dem Speicher MEM, gespeichert. Alternativ können die Whiteliste L und/oder die Merkmale aber auch zentral, in der Ferne, in einem Server SV gespeichert werden und zur Prüfung über die Schnittstelle SS1 durch die Ferne angesprochen werden. Die Kommunikation zwischen Sicherheitsmodul SM und dem Fernspeicher/Server SV erfolgt dabei vorteilhafterweise in einer verschlüsselten Form, zum Beispiel mit Public-Key Verschlüsselung, oder anderen geeigneten Verschlüsselungsvarianten.

Die als gut und zulässig erkannten Dateien und deren Merkmale L werden hierzu im Vorfeld, in einer Lernphase, über eine Dateiscannereinheit DSE und den Merkmalsextrahierer ME erfasst. "Im Vorfeld" bedeutet hier insbesondere, bevor die neue Datei D das erste Mal zur Ausführung gebracht oder überhaupt in das System CS geladen wird. Es besteht hier die Annahme, dass zum Zeitpunkt der Erfassung durch die Einheit DSE sämtliche installierten Applikationen und Software frei von Viren sind und insbesondere zur Ausführung auf dem zu sichernden System CS freigegeben sind, z.B. durch einen erfahrenen Administrator nach sorgfältiger Prüfung ("Health Checks") des Systems CS. Die Datei-Scanner-Einheit DSE implementiert eine Datei-Suchfunktion und sucht insbesondere alle ausführbaren Dateien und davon abhängige Daten. Beispiele von solchen abhängigen Daten sind assoziierte Benutzerinterfaceelemente wie etwa eine Bilddatei "Icon", mit der der Benutzer in einer GUI über ein Zeiger-Tool (eg, Computer-Maus) interagiert durch Mausklick zum Aufrufen der entsprechenden Datei D. Andere Bespiele für solche abhängigen Daten sind einbindbare Routinen-Bibliotheken (DLLs, engl., "dynamiclink library" (Windows ™ oder "shared objects" (Linux/Unix)) und sonstige Funktions-Bibliotheken (eng., "libraries").

Die Merkmalsextraktion erfolgt über den Merkmalsextraktor FE, der auch im Vorfeld auf den so gefundenen ausführbaren Dateien operiert. Der Merkmalsextraktor FE und der Scanner DSE können in Skriptsprachen (PERL, PYTHON, RUBY, etc.) oder als Shell-Module oder als Treiber programmiert werden. Der Merkmalsextraktor FE und der Scanner DSE operieren entweder in Serie, erst der Scanner DSE und dann der Merkmalsextraktor FE, oder semi-parallel bzw. überlappend. Der Merkmalsextraktor FE kann sowohl wie beschrieben in der Lernphase eingesetzt werden als auch zur Merkmalserfassung der neuen Datei, wenn auf Ähnlichkeit durch den Prüfer PL geprüft werden soll.

Der Vollständigkeit halber wird hier darauf hingewiesen, dass das verwendete Ähnlichkeitsmaß natürlich implizit auch ein Unähnlichkeitsmaß darstellt. Das Eine bedingt das Andere, aber im entgegengesetzten Sinne. Mit anderen Worten eine hohe Ähnlichkeit impliziert eine geringe Unähnlichkeit. Und umgekehrt eine hohe Unähnlichkeit eine geringe Ähnlichkeit. D. h., das Ähnlichkeitsmaß kann natürlich invers auch als Unähnlichkeitsmaß ausgelegt werden. Das ist abhängig von der genauen Implementierung und dem benutzten Algorithmus. Die Abfrage nach Ähnlichkeit kann daher auch ergeben, dass eine Ähnlichkeit festgestellt wird, wenn ein Schwellenwert unterschritten wird, im Gegensatz zu der oben dargestellten Ausführungsform, wo der Schwellenwert überschritten werden muss. D. h., wenn die Unähnlichkeit über ein Unähnlichkeitsmaß ausgedrückt wird, erfolgt die Feststellung der Ähnlichkeit dann, wenn das Unähnlichkeitsmaß einen vorgegebenen Schwellwert unterschreitet. Anders ausgedrückt, nur wenn die Datei ein Unähnlichkeitsmaß aufweist, das unterhalb eines Schwellenwerts liegt, wird diese Unähnlichkeit als unwesentlich angesehen und eine Ähnlichkeit impliziert und daher zur Ausführung gebracht. Beide Varianten sind hierbei vorgesehen. Mit anderen Worten fungiert das Ähnlichkeitsmaß in allen Ausführungsformen ebenfalls implizit als Unähnlichkeitsmaß und umgekehrt jedes Unähnlichkeitsmaß funktioniert implizit auch als Ähnlichkeitsmaß.

Des Weiteren ist festzustellen, dass das Prinzip der Ähnlichkeitserfassung mittels der Prüf-Logik nicht notwendigerweise nur als einfache Schwellwertabfrage ausgeführt werden muss. Andere Algorithmen aus dem Fundus des maschinellen Lernens, zum Beispiel lineare oder nicht-lineare Modelle, nicht parametrische Modelle, Support Vector Machines (SVM) und probabilistische Modelle (z.B. Bayes' Klassifizier) sind ebenfalls vorgesehen.

Als Beispiel eines nicht-linearen Modells seien hier insbesondere künstliche neuronale Netze (KNN) genannt. Mit anderen Worten, die Prüf-Logik PL kann insbesondere als KNN implementiert sein. Wenn die Prüf-Logik PL als KNN ausgelegt werden soll kann eine "Deep-Learning" Architektur vorteilhaft sein. In dieser Architektur umfasst das KNN neben der Eingangs- und Ausgangsschicht auch ein oder mehrere verborgene Schichten. Die Knoten der Eingangsschicht entsprechen hierbei der Anzahl der zu prüfenden Merkmale. Die Ausgangsschicht kann in einfachen Fällen nur zwei Knoten enthalten, wobei ein Knoten kodiert, dass die Software ähnlich ist, während der andere Knoten die Verneinung darstellt, nämlich dass die Software D nicht ähnlich zu den bereits bekannten Dateien in der Liste L ist, d.h., dass also die Ausführung unterbunden werden soll. Alternativ sind auch andere KNN Architekturen vorgesehen, wie etwa das Perceptron (ein KNN mit nur einer einzigen Schicht), oder rekurrente KNN (RNN), oder CNN (engl., "convolutional neural network"), oder andere.

Die bei dem Eingangsscan durch den Scanner DSE gefundenen Dateien, die per Definition als vertrauenswürdig anzusehen sind, stellen somit einen Teil eines Trainingskorpus dar. Über Virusdatenbanken (in denen Strukturen bekannter Schadsoftware gespeichert ist) können Lehr-Beispielen für Schad- Software ermittelt, und so der Trainingskorpus komplementiert werden. Somit kann ein KNN Trainingskorpus gebildet werden, der auf das konkrete Computersystem CS zugeschnitten ist. Das KNN kann dann in herkömmlicher Weise, zum Beispiel über Forward-Backward-Propagation-Methoden mit diesem Trainingskorpus trainiert werden, durch Einstellung von Gewichten in den Knoten.

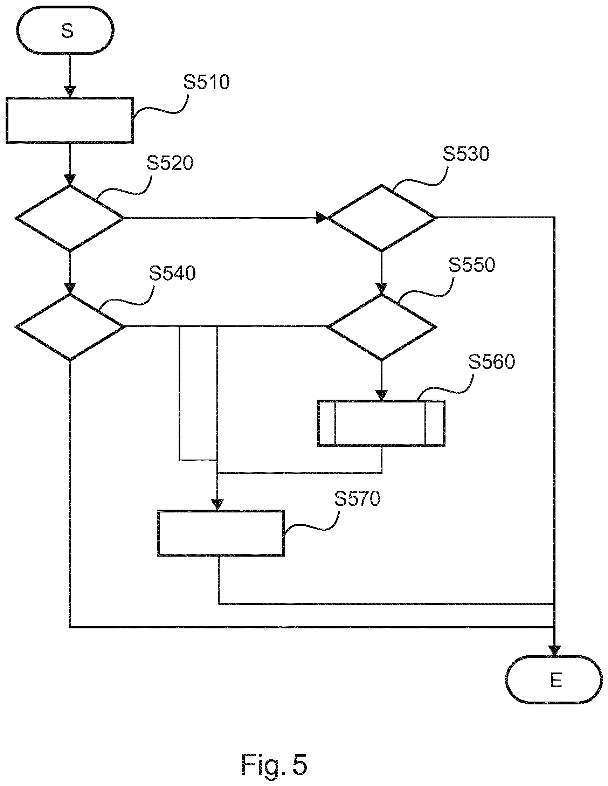

In einer bevorzugten Ausführungsform umfasst das Sicherheitsmodul SM auch eine Benutzerschnittstelle UI. Über diese Schnittstelle UI kann eine Override-Funktion ausgeführt werden. Insbesondere kann zum Beispiel, wenn die Prüfungslogik feststellt, dass eine Software nicht hinreichend ähnlich ist, das entsprechende Ähnlichkeitsmaß auf einer grafischen Benutzeroberfläche dem Benutzer auf einem Monitor dargestellt werden, mit einer Option, die Software doch freizugeben. Das Freischalten muss der Benutzer dann explizit anfordern, zum Beispiel durch Auswählen eines entsprechenden "OK-Buttons" o. Ä. Natürlich ist eine Darstellung der UI als grafische Benutzeroberfläche nicht zwingend notwendig. Eine gänzlich textbasierte oder spracherkennungsbasierte Benutzerschnittstelle UI ist auch vorgesehen. Die Override-Schnittstelle UI kann auch zweistufig ausgelegt werden, indem es auch zusätzlich der Zustimmung durch eine weitere Person, wie einem Administrator, bedarf um die neue Software doch freizuschalten. D. h., selbst wenn der Benutzer die Ausführung D wünscht, wird zusätzlich noch eine Bestätigung über den Administrator angefordert. In manchen Ausführungsformen erfolgt ein Einholen der User-Bestätigung nur in bestimmten Fällen. Insbesondere werden Dateien, die als besonders unähnlich erkannt werden, im Vorfeld abgelehnt. D. h. es kommt erst gar nicht zu einer Anfrage bei dem Benutzer, ob eine Ausführung trotzdem gewünscht ist. Die Benutzerschnittstelle UA ist also insbesondere für Grenzfälle vorgesehen, wo das Ähnlichkeitsmaß innerhalb eines vordefinierten, kleinen Intervalls um den Schwellwert liegt. Nur dann hat der User überhaupt eine Option, sein Overriderecht auszuüben. Weitere Varianten werden unter zur FIG. 5 diskutiert.

Im Übrigen sei darauf hingewiesen, dass die oben beschriebene Zweistufigkeit des Sicherheitsmoduls SM optional ist. D. h. der ID-Checker ist nicht in allen Ausführungsformen vorgesehen. D.h. in manchen Ausführungsformen umfasst das Sicherheitsmodul SM also nur die Prüf-Logikstufe PL, in der nur auf Ähnlichkeit geprüft wird. Die Zweistufigkeit mit vorgelagerter Identitätsprüfung durch den ID-Checker IDC über Hashwert oder sonstigen Zahlenkombinationen ist aber vorteilhaft, weil dadurch die Performance das Moduls SM verbessert werden kann. Insbesondere kann die Prüf-Logik PL entlastet werden, da die Berechnung über das Ähnlichkeitsmaß und die Merkmalsextraktion aufwändig sein können. Wenn nämlich die Software schon bekannt ist, ist die Berechnung über die Ähnlichkeit eigentlich nicht notwendig. Wenn nur die Ähnlichkeitsprüfung durch die Prüflogik PL vorgesehen ist (also kein ID-Checker IDC vorgesehen ist) und ein Betriebssystem mit Prozessallokierung vorhanden ist, erfolgt die Interaktion zwischen dem Betriebssystem und der Prüf-Logik PL analog wie oben beschrieben für den ID-Checker IDS.

In den folgenden Flussdiagrammen FIG. 3 bis FIG. 5 wird die Funktionsweise des oben beschriebenen Sicherheitsmoduls SM näher beschrieben. Es ist allerdings zu verstehen, dass die im Folgenden beschriebenen Verfahren Lehren an sich darstellen und nicht notwendigerweise in Verbindung zu der Architektur des Sicherheitsmoduls in FIG. 1 und FIG. 2 zu lesen ist.

Zunächst wird in dem Flussdiagramm FIG. 3 die oben erwähnte Lernphase, d.h. das Erstellen der Whiteliste L nebst zugehörigen Merkmalen, erklärt. Die Dateien, die in der Whiteliste L verlistet werden, können in diesem Zusammenhang auch als Referenzdateien bezeichnet werden, da diese Dateien eine Referenz dafür bilden, was als vertrauenswürdig für das vorliegende Computersystem CS anzusehen ist.

In Schritt S310 werden im Vorfeld, d. h. zu einem bestimmten definierten Zeitpunkt (vor Ausführung eines neuen Programms D), bei dem auszugehen ist, dass auf dem Rechensystem CS keine Schadsoftware vorhanden ist, insbesondere alle ausführbaren Dateien gesucht. Dies umfasst insbesondere auch Bibliotheken und sonstige Dateien, die von den ausführbaren Daten referenziert werden oder anderweitig mitbenutzt werden.

Wenn im Schritt S320 eine ausführbare Datei im Verlaufe der Suche gefunden wurde, dann wird optional in einem Schritt S330 eine Identität dieser Datei festgestellt. Insbesondere kann dies durch Berechnen eines Hashwerts der Datei als Zeichenstring erfolgen.

Im Schritt S340 werden ein oder mehrere Merkmale aus der gefundenen Datei extrahiert. Im Folgenden wird eine Reihe von vorgesehenen Merkmalen diskutiert. Es ist zu verstehen, dass jedes einzelne Merkmal separat extrahiert und verwendet werden kann durch die Prüf-Logik PL, d.h. in der Ähnlichkeitsprüfung. Insbesondere kann jedes eigene Merkmal ohne die anderen Merkmale verwendet werden. Insbesondere können aber auch mehrere Merkmale kombiniert werden, zum Beispiel in gewichteten Summen o. Ä. Insbesondere ist ein solches "Kombi"-Merkmal, das aus jeder möglichen Kombination oder Unterkombination aus den folgenden Merkmalen hervorgeht, hier vorgesehen in verschiedenen Ausführungsformen. Konkret sind ein oder mehrere der folgenden Merkmale vorgesehen zur Ähnlichkeitsbestimmung:
- Metadaten der Datei: insbesondere ein oder mehrere aus: Dateiname, Größe, Speicherort (Pfad), Eigentümer, Berechtigungen, Erstellungsdatum, Hersteller, Produktname, Version.
- Digitale Signatur: insbesondere ein oder mehrere aus: Gültigkeit der Signatur, zum Signieren benutztes Zertifikat, Kette der Zertifikate vom Signaturzertifikat bis zum Root-Zertifikat, Metadaten des Zertifikats: Firma, Name, angegebene Email-Adresse.
- Informationen zu abhängigen ausführbaren Dateien: insbesondere ein Abhängigkeitsgraph der von der ausführbaren Datei benutzten Bibliotheken (z.B. DLLs), insbesondere mit Name und/oder Verweis auf Daten in der DLL oder einer Datenbank. Da im Lernmodus i.A. alle Dateien gescannt werden, wird nur ein Verweis auf die bereits gescannte Bibliothek gespeichert.
- Aufgerufene Funktionen: Liste der von der ausführbaren Datei aufgerufenen Funktionen in benutzten Bibliotheken (Name/Bibliothek), vorteilhafterweise mitsamt der Häufigkeit der Aufrufe.
- Enthaltene UI-Ressourcen: insbesondere ein oder mehrere aus: Liste der enthaltenen User-Interface-Ressourcen (Bilder und/oder Icons und/oder Dialogboxen und/oder Texte), vorteilhafterweise mit einer ID der Ressource sowie einem Hash-Wert von Ressourcendaten.

Allgemein sind Merkmale von Interesse, durch die sich ein funktionales Verhalten der Datei D ausdrücken lässt und/oder die unter Aktualisierungen ("updates") der in der Whiteliste verlisteten Software als invariant zu erwarten sind. In diesem Zusammenhang sei daraufhingewiesen, dass insbesondere die hier vorgesehenen Merkmale Signatur und UI-Ressourcen für ein Blacklisting, also zum Erkennung von Malware, nicht zum Einsatz kommen, da diese für die Malware-Erkennung an sich bedeutungslos sind. Hingegen wurden diese und ähnliche Merkmale für die Erkennung von Updates von bereits vorhandener Software als nützlich erkannt, und somit sind diese beiden (und ähnliche) Merkmale für das hier vorgeschlagene predikative Whitelisting von besonderem Vorteil. Zum Beispiel kann erwartet werden, dass ein GUI-Icon einer Anwendung sich typischerweise bei einem Update nicht ändert, somit ein gutes Merkmal für das hier vorgeschlagene prediktive Whitelisting ist. Des Weiteren erlaubt das Prüfen auf dem Merkmal "digitale Signatur" festzustellen, ob Schadsoftware bestehende (d.h, auf der Liste befindliche) Software verändert hat. Bei einer solchen Änderung stimmen dann die digitalen Signaturen nicht mehr. Das liegt insbesondere an der Hash-Funktion, die für die Erstellung der digitalen Signatur verändert wurde. Die Hash-Funktion reagieren sehr sensibel, selbst auf kleinste Änderungen in Zeichenketten.

Im folgenden Schritt S350 werden die extrahierten Dateien gespeichert. Insbesondere geschieht dies lokal in dem zu schützenden Computersystem CS. Das ist aber nicht notwendig und eine Speicherung kann auch extern auf einem externen Speicher oder (zentralen) Server in der Ferne erfolgen. Insbesondere erfolgt die Speicherung so, dass die IDs der Dateien z.B. die Dateinamen oder Hashwerte, zugeordnet sind zu den entsprechenden Merkmalen, die im Schritt S340 extrahiert wurden.

Insbesondere wird im Schritt S360, eine ID der gefundenen Datei in die Whiteliste mitaufgenommen und dadurch als neue Referenzdatei deklariert. Der ID-Wert, z.B. der Hashwert aus Schritt S330, wird vorteilhafterweise mit dem Dateinamen der Datei assoziiert. Die Zuordnung der Dateiennamen, des optionalen Hashwertes oder anderer ID-Kennung, mit den jeweiligen Merkmalen kann in einer geeigneten Dateistruktur erfolgen, wie zum Beispiel vorzugsweise in einer Liste, in einem Datenbankeintrag oder in anderen Datenstrukturen, zum Beispiel verzeigerten Datenstrukturen o. Ä.

Die vorangegangenen Schritte werden für jede gefundene Datei ausgeführt und so die Whiteliste schrittweise aufgebaut.

Wenn im Schritt 310 keine neuen Dateien gefunden werden, dann werden in einem optionalen Schritt S370 die Daten, d. h. Dateinamen, Hashwert und Merkmale, auf z.B. auf einen zentralen Server geladen. Durch diesen optionalen Schritt kann man ein zentrales Repository aller, z.B in einem Unternehmen, verwendeter Software aufbauen und ggf. gezielt zusätzlich Black- oder Whitelisten zu definieren, auf die das Modul SM ggfs. zugreifen kann, ohne auf Ähnlichkeit zu prüfen (siehe unten, Schritt S440).

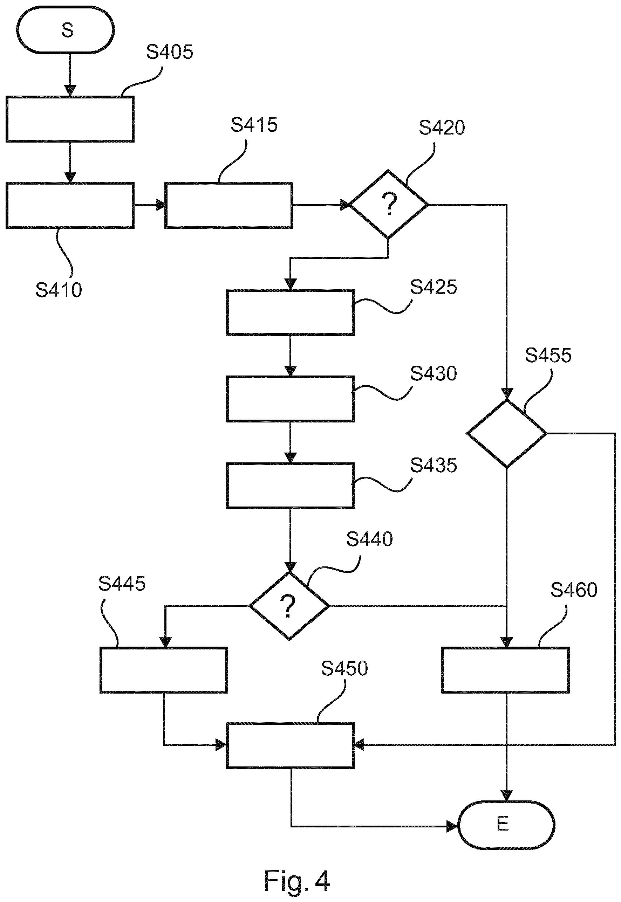

In dem folgenden Flussdiagramm FIG. 4 wird die Funktionsweise insbesondere der Prüf-Logik PL, d. h. des Ähnlichkeitsabgleichs, genauer dargestellt.

In einem Schritt S405 wird eine Anweisung empfangen, eine (neue) Datei D auf dem Computersystem CS auszuführen. Die Anweisung kann von einem Benutzer kommen oder von einer anderen (bereits bekannten Datei), die die Datei zum Ausführen bringen will. In einem Ausführungsbeispiel wird also Reaktion auf die Anweisung eine Prozessallokierung für die Datei D vorbereitet die auf dem System CS ausgeführt werden soll. Das kann im Fall bestimmter Betriebssystem-Arten umfassen, dass eine solche Prozessallokierung initiiert, allerdings noch nicht abgeschlossen wird.

In einem Schritt S410 wird die angewiesene Ausführung zunächst blockiert. Das kann dadurch geschehen, dass im Schritt S410 die Allokierung des Prozesses und/oder des Adressraumes für die auszuführende Datei D zunächst blockiert wird. die Ausführung von Datei D wird solange angehalten, bis das Ergebnis der Prüfung vorliegt (siehe unten Schritt S440). Wie unten genauer erklärt wir danach entweder der Prozess blockiert (also die Allokation abgebrochen) oder erlaubt.

Im Schritt S415, der optional ist, wird dann ein ID-Wert für die Datei, bzw. für deren Inhalt, bestimmt. Der Inhalt ist ein Teil oder die Gesamtheit der Zeichenketten, die die Instruktionen repräsentieren. Das kann z.B. dadurch geschehen, dass ein Hashwert der auszuführenden, vermeintlich neuen Datei D, ermittelt wird. Die Berechnung des Hashwertes geschieht durch Anwendung einer bekannten Hashfunktion oder aber auch durch Extraktion einer charakteristischen Dateienkennung, wie zum Beispiel einer Seriennummer oder Ähnliches.

Im Schritt S420, der optional ist, wird durch einen ID-Check geprüft, ob der ID-Wert (z.B Hashwert) bereits bekannt ist. Das geschieht über Abgleich mit den ID-Werten aus der Whiteliste L, die z.B. (aber nicht zwingend) durch das oben dargestellte Lern-Verfahren nach FIG. 3 generiert wurden.

Ist der ID-Wert/Hashwert bereits bekannt, d. h. ist dieser Hashwert schon verlistet in der Whiteliste L, wird im Schritt S455 die Prozesserstellung (siehe Schritt S405 oben) erlaubt und die Datei kann in einem Schritt S450 zur Ausführung gebracht werden.

Im einem optionalen Schritt S455 wird auch alternativ geprüft, ob der bekannte Hash erlaubt ist. Wenn ja, erfolgt ebenfalls eine Ausführung der Datei im Schritt S450. Wenn der bekannte Hash nicht erlaubt ist, wird im Schritt S460 die Prozessausführung abgebrochen. Obwohl also das hier vorgestellte Verfahren ausschließlich als Whitelisting-Variante konzipiert ist und gänzlich ohne Blacklisting implementierbar ist, ist dennoch in dieser Ausführungsform über Schritt S455 eine Kombination mit einer Blacklisting-Abfrage vorgesehen. Der ID-Wert kann in dem optionalen Schritt S455 benutzt werden um z.B. eine Virendatenbank oder andere Datei-Aufstellung abzufragen und einen Abgleich zu machen, um so bekannte und unerwünschte Dateien von vornherein auszuschließen.

Wird im Schritt S420 allerdings erkannt, dass der Hash noch unbekannt ist, dann erfolgt die Ähnlichkeitsprüfung (siehe unten, Schritt S440). Hierzu werden im Schritt S425 analog, wie in FIG. 3 dargestellt, die entsprechenden Merkmale aus der neuen Datei D extrahiert.

Im Schritt S430 erfolgt dann der Vergleich der Merkmale über entsprechende Quantifizierungen mit den Merkmalen der Dateien in der Whiteliste L.

Insbesondere werden in dem Schritt S435 jeweilige Ähnlichkeitsmaße bestimmt als Funktion der Merkmale der neuen Datei und der jeweiligen Merkmale der verschiedenen Dateien der Whiteliste. Es wird also eine Reihe von Ähnlichkeitsmaßen bestimmt, je Datei in der Whiteliste.

Im Schritt S440 erfolgt dann die Prüfung durch Vergleich der Ähnlichkeitsmaße mit einem Schwellwert. Dieser Schwellwert kann vorgegeben sein, kann aber auch vom Benutzer oder Administrator eingestellt werden. In einer Ausführungsform wird das Ähnlichkeitsmaß normiert auf eine Zahl zwischen 0 und 1 und als Prozentwert ausgedrückt. In einigen Ausführungsbeispielen wurde der Schwellwert mit mindestens 90 Prozent bemessen, zum Beispiel 92 Prozent. Der genaue Wert wird vom Ähnlichkeitsmaß und von dem konkreten System bzw. den Daten variieren und ist vorzugsweise in eine Kalibrierungsphase vom Administrator und sonstigem geschulten Personal einzustellen anhand von weiteren Trainingsdaten.

Entsprechend der oben genannten Merkmale sind die folgenden Ähnlichkeitsmaße oder entsprechende Tests vorgesehen:
- Metadaten: Gleichheit von einem oder mehreren aus Dateinamen, Speicherorten, Dateieigentümern, Abweichung in der Größe, Gleichheit des Herstellers und Produktnamens.
- Digitale Signatur: Ähnlichkeit des zum Signieren benutzten Zertifikats. Hierbei werden verglichen: benutzte Stammzertifizierungsstelle, Firma, Name, Mail-Adresse. Die Ähnlichkeit nimmt zu, je mehr Eigenschaften übereinstimmen, z.B. gleicher Name, gleiche Firma, gleiche Email-Adresse, andere - aber ebenso vertrauenswürdige - Stammzertifizierungsstelle.
- Abhängige ausführbare Dateien: die Ähnlichkeit nimmt zu, je mehr Knoten des Abhängigkeits-Graphen übereinstimmen
- Aufgerufene Funktionen: die Ähnlichkeit nimmt zu, je mehr gleiche Funktionen aufgerufen werden und je genauer die Aufrufhäufigkeit übereinstimmt
- UI-Ressourcen: Anhand der Hash-Werte werden gleiche Ressourcen ermittelt je Kategorie (Icon, Bild, Dialogbox, Texte). Zum Beispiel werden die Hashwerte der Icons verglichen. Gleiche Ikons sollten gleiche Hashwerte liefern. Andere Verfahren aus der Bilderkennung sind auch vorgesehen, wie z.B. Histogramm-Analyse, Subtraktion, SSIM oder Wavelet-Verfahren, wie SURF oder SIFT. Texte in Dialogboxen können durch textbasierte Ähnlichkeitsmaße verglichen werden, z.B. durch "edit distance".

In all den genannten Ähnlichkeitsbestimmungen können die Resultate auf geeignet normierte Maßzahlen abgebildet und so quantifiziert werden.

Im Ergebnis ergibt sich ein für jede in der Liste L gespeicherte Anwendung ein Ähnlichkeitswert zur neuen, unbekannten Anwendung D. Genauer gesagt ergibt sich ein jeweiliger Ähnlichkeitswert für alle oben genannten Merkmalskategorien. Aus diesen kann dann z.B, ein gewichteter Mittelwert als konsolidiertes Ähnlichkeitsmaß bestimmt werden. Die Wichtung der einzelnen Merkmalskategorien können ebenfalls aus diesem initialen Lernvorgang abgeleitet werden oder können durch Kalibration experimentell bestimmt werden.

Vorteilhafterweise werden bei der Berechnung des Ähnlichkeitsmaßes nicht notwendigerweise immer alle erfassten Merkmale berücksichtigt, sondern es erfolgt erst eine Ähnlichkeitsbestimmung mit Ähnlichkeitsmaße für ein einzelnes oder einer Auswahl von Merkmalen. Wird dabei Ähnlichkeit festgestellt, bricht die Suche ab und die restlichen Merkmale werden nicht mehr betrachtet. Nur wenn keine Ähnlichkeit gefunden wird, weitet sich die Suche auf die anderen Merkmale aus, oder die Aufweitung der Suche wird in weiteren (ein oder mehreren) Stufen sukzessive ausgeweitet. Dieses schrittweise Aufweiten der Ähnlichkeitssuche baut also auf eine vordefinierte Hierarchie der Merkmale auf. Insbesondere erlaubt das schrittweise Aufweiten der Ähnlichkeitssuche die Performance des Sicherungsmoduls SM zu verbessern. Im Besonderen, und gemäß einer Ausführungsform, erfolgt anfangs eine systematische Merkmals-Eingrenzung anhand praktischer Erfahrungswerte für Updates von Software: in einer Ausführungsform wird zunächst nur auf Dateinamengleichheit geprüft. Wenn keine Ähnlichkeit festgestellt wird, dann wird ausgeweitet auf Herstellergleichheit gemäß Signatur. In einer Ausführungsform wird auf ein Überprüfen der übrigen Merkmale nur dann ausgeweitet, wenn die Überprüfung auf Dateinamengleichheit und/oder digitaler Signatur eine Übereinstimmung ergibt. Wie erwähnt, wird während dieser sich ausweitenden Suche bereits eine Ähnlichkeit über den Schwellenwert festgestellt, so wird die Suche beendet und die Datei kann zur Ausführung freigegeben werden. Umgekehrt wird in einigen Ausführungsformen die Suche abgebrochen, wenn für gewisse Schlüsselmerkmale keine Ähnlichkeit/Übereinstimmung festgestellt wurde und die Ausführung der Datei D wird deswegen abgelehnt, da die Datei D dann als Schadsoftware angesehen wird. Insbesondere wird die digitale Signatur in einer Ausführungsform als ein solches Schlüsselmerkmal angesehen. Mit anderen Worten, gibt es einen Widerspruch in der digitalen Signatur, dann ist es in einer Ausführungsform vorgesehen die Ähnlichkeitssuche abzubrechen und auf ein Vorliegen von Schadsoftware zu schließen und somit die Ausführung der Datei D nicht zuzulassen.

Ferner sind auch diverse weitere Performance-Optimierungen vorgesehen. In einer Ausführungsform kürzt man den Abhängigkeits-Graphen. Zum Beispiel kann man bei Abhängigkeits-Graphen für Dateien des Betriebssystems die weiteren Abhängigkeiten außer Acht lassen.

Wenn der Vergleich des Ähnlichkeitsmaßes in Schritt S440 darauf schließen lässt, dass die neue Datei hinreichend ähnlich ist, dann wird die Datei im Schritt S450 zum Ausführen gebracht. D.h., im Schritt S440 werden in einer Schleife die entsprechenden Ähnlichkeitsmaße berechnet und jeweils für jede Datei in der Whiteliste L mit dem Schwellwert verglichen. Sobald mindestens eine Datei in der Whiteliste L gefunden wurde, bei der das Ähnlichkeitsmaß den Schwellenwert übertrifft, wird hinreichende Ähnlichkeit attestiert.

Optional wird im Schritt S445 die Whiteliste L aktualisiert durch Aufnahme einer ID, zum Beispiel des Hashes, wenn die neue Datei D als hinreichend ähnliche Datei erkannt wird.

Führt jedoch die Ähnlichkeitsanalyse im Schritt S440 zu dem Ergebnis, dass keine Ähnlichkeit vorliegt, wurde also keine Datei in der Liste L gefunden zu der eine hinreichende Ähnlichkeit (relativ des Schwellwertes) festgestellt werden konnte, wird die Ausführung der Datei D aus dem System CS im Schritt S460 verhindert. Insbesondere wird die Prozessinitialisierung abgebrochen.

Optional kann in dem Schritt S460 auch ein Warnsignal akustisch oder optisch ausgegeben werden. Zum Beispiel kann eine Warnlampe zum Leuchten gebracht werden oder es kann eine entsprechende Nachricht auf einem Bildschirm des Computersystems angezeigt werden. Die Nachricht informiert den Benutzer darüber, dass das gewünschte Programm D nicht ausgeführt wird. Alternativ, zum Beispiel für Geldautomaten, kann in diesem Fall auch eine Nachricht, ohne dass es der Bankkunde bemerkt, an die Bank oder an Sicherheitspersonal übermittelt werden. Diese Nachricht beinhaltet insbesondere Informationen über den Standort des Geldautomaten. Gegebenenfalls können dann Sicherheitskräfte vor Ort beordert werden oder es kann eine Überwachung angeordnet werden, je nachdem.

Obwohl im obigen Schaubild in FIG. 4 an einigen Stellen die Prozesserzeugung ins Spiel gebracht wurde, ist dies natürlich für Systeme, in denen kein oder ein alternatives Betriebssystem vorgesehen ist, wegzulassen.

Auch kann die Ähnlichkeitsbestimmung im Schritt S440 über Ausführung eines entsprechenden Maschinenlernalgorithmus, wie oben erwähnt, ausgeführt werden, anstatt über eine Schwellwertabfrage, wie oben beschrieben. Insbesondere kann im Schritt S440 ein KNN benutz werden. Hierbei können die Merkmale in das KNN über der Eingangsschicht eingefüttert werden und dann das Ergebnis (Ähnlichkeit, "ja" oder "nein"?) an den mindestens 2 Knoten der Ausgangsschicht ausgelesen werden. Wenn die Ausgabe an der Ausgangsschicht des KNN darauf hindeutet, dass keine Ähnlichkeit vorliegt, wird entsprechend verfahren wie oben erwähnt und die Ausführung der Datei wird verhindert. Andernfalls wird die Ausführung freigegeben.

Im nächsten Flussdiagramm FIG. 5 wird die Funktionsweise der oben beschriebenen Overridefunktionsschnittstelle UI näher dargestellt.

Schritt S510 entspricht dem Schritt S460, wobei die Ausführung der Datei blockiert ist. Das heißt, es wurde im Schritt S440 festgestellt, dass keine hinreichende Ähnlichkeit vorliegt und die Datei ist unbekannt.

Im Schritt S520 wird dann entschieden, ob der Benutzer überhaupt über eine Ausführung entscheiden kann, d. h. ob der Benutzer eine Overridefunktion ausüben kann. Wenn ja, wird eine entsprechende Information über die Benutzerschnittstelle UI dargestellt und dem Benutzer die Option geboten, die Ausführung trotzdem herbeizuführen, obwohl das Sicherheitsmodul SM zu dem Ergebnis gekommen ist, dass keine hinreichende Ähnlichkeit vorliegt.

Wenn im Schritt S540 der Benutzer über die Benutzerschnittstelle UI an das Sicherheitsmodul absetzt, dass eine Ausführung trotzdem gewünscht ist, wird die Ausführung im Schritt S570 erzwungen.

Wenn der Benutzer der Ausführung nicht zustimmt, also dem Sicherheitsmodul "recht gibt", bleibt die Blockade bestehen und die neue Datei wird nicht ausgeführt.

Wie oben erwähnt kann im Schritt S520 die Entscheidung darüber, ob der Benutzer überhaupt ein Override-Recht hat, insbesondere davon abhängig gemacht, wie das Ähnlichkeitsmaß ausfällt. Wie oben erwähnt, wird in einer Ausführungsform die Override-Option in der UI nur dann angeboten, wenn das Ähnlichkeitsmaß hinreichend nahe an dem Schwellwert ist. Diese Nähe kann über ein einstellbares oder fest vorgegebenes Intervall um den Schwellwert herum definiert sein.

Es ist festzustellen, dass das hier beschriebene Overridesystem natürlich nicht nur Anwendung findet, wenn die Ähnlichkeitsbestimmung über einen Schwellwert erfolgt. Auch wenn maschinelles Lernen zum Einsatz kommt, kann ebenfalls die Overridefunktion angeboten werden. Das geschieht in allen Fällen durch eine nähere Auswertung des Ergebnisses des maschinellen Algorithmus, d. h. über eine Bewertung der Aussagekräftigkeit des Ergebnisses der Ähnlichkeitsprüfung.

Wenn im Schritt S520 entschieden wird, dass der Benutzer eine Override-Option nicht ausüben kann, wird im Schritt S530 geprüft, ob doch ggf. eine temporäre Freigabe durch den Administrator erfolgen soll. Wenn ja, wird die Ausführung der Datei erlaubt. Wird im Schritt S530 jedoch festgestellt, dass keine temporäre Freigabe durch den Administrator erfolgt ist, bleibt die Blockierung bestehen.

In einer besonderen Ausführungsform, wenn die Freigabe durch den Administrator erfolgen soll, kann in einem optionalen Schritt S550 geprüft werden, ob der Lernmodus aktiv ist, z.B. wie in FIG. 3 beschrieben. Ist der Lernmodus nicht aktiv, wird die Ausführung im Schritt S570 zugelassen. Ist allerdings der Lernmodus aktiv, wird die Ausführung blockiert und in einem optionalen Schritt S560 werden die entsprechenden Lernmodus-Schritte, z.B. gemäß Flussdiagramm FIG. 3, ausgeführt, d. h. es werden insbesondere die Merkmale extrahiert und ggfs. der ID-Wert (z.B. Hashwert) bestimmt, etc. Diese optionalen Schritte S550, S560 haben den Vorteil, dass eine Lernphase (wie z.B. die in Figur 3 beschriebene, aber nicht notwendigerweise diese) für neue Software nach Bedarf eingeschaltet werden kann. Diese Lernphaseneinschaltung ist von Vorteil, wenn neue Software (dauerhaft) auf das System CS installiert werden soll, die noch nicht bekannt (oder ähnlich) ist. Dann wird alles, was in dieser Zeit der Lernphaseneinschaltung auf das System CS gebracht wird, als vertrauenswürdig betrachtet und zur Whiteliste L hinzugefügt. Somit erlauben die Einschaltungsschritte S550,S560 eine Erweiterung des initialen Lernens. Praktisches Beispiel: man möchte in dem System CS von einer Software zu einer anderen wechseln. Diese andere Software ist nicht ähnlich zu der bereits vorhandenen Software. Man schaltet also für die Installation der neuen Software die temporäre Freigabe mit Lernmodus ein und somit wird die neue Software zur Whitelist L hinzugefügt. Danach kann man insbesondere Updates von der neuen Software ohne den Lernmodus installieren, denn die Ähnlichkeitserkennung wird die Updates für die neue Software nun als ähnlich erkennen.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Ein Sicherheitsmodul (SM) für ein Computer-System (CS), umfassend:
eine Eingangsschnittstelle (IN2) zum Erfassen mindestens eines Merkmals einer Datei;
eine Prüf-Logik (PL), die eingerichtet ist, anhand des mindestens einen Merkmals zu überprüfen, ob die Datei eine Ähnlichkeit zu einer oder mehreren Referenzdateien aufweist, wobei die eine oder mehreren Referenzdateien als vertrauenswürdig eingestuft sind und wobei die Datei verschieden ist von den einen oder mehreren Referenzdateien;
wobei die Prüf-Logik (PL) weiter eingerichtet ist, eine Ausführung der Datei auf einem Computer-System (CS) nur dann zu genehmigen, wenn die Überprüfung zu dem Ergebnis kommt, dass eine Ähnlichkeit zu der einen oder mehreren Referenzdateien vorliegt,
**dadurch gekennzeichnet, dass** die Überprüfung der Ähnlichkeit durch eine Berechnung eines Ähnlichkeitsmaßes erfolgt, wobei das Ähnlichkeitsmaß eine Ähnlichkeit des mindestens einen Merkmals mit entsprechenden ein oder mehreren Merkmalen mindestens einer der Referenzdateien quantifiziert.

2. Sicherheitsmodul (SM) nach Anspruch 1, wobei die eine oder mehreren Referenzdateien im Vorfeld durch eine Bestandsaufnahme auf dem Computer-System (CS) ermittelt wurden durch eine Datei-Scan-Einheit (DSE).

3. Sicherheitsmodul (SM) nach Anspruch 1 oder 2, wobei die Prüf-Logik (PL) eingerichtet ist, die Datei zu einer neuen Referenzdatei zu deklarieren, wenn das CGS:AK
Ergebnis ergibt, dass eine solche Ähnlichkeit vorliegt.

4. Sicherheitsmodul (SM) nach einem der vorangehenden Ansprüche, weiter umfassend eine weitere Prüf-Logik (IDC), die der Prüf-Logik (PL) vorgelagert ist, und die eingerichtet ist, eine Identität der Datei mit den einen oder mehreren Referenzdateien zu prüfen, und wobei die Überprüfung durch die Prüf-Logik (PL) nur dann erfolgt, wenn die Prüfung durch die weitere Prüf-Logik (IDC) zu dem Ergebnis kommt, dass keine Identität vorliegt.

5. Sicherheitsmodul (SM) nach Anspruch 4, wobei die Überprüfung der Identität auf Grundlage eines Hashwertes der Datei und eines Hashwertes der ein oder mehreren Referenzdateien erfolgt.

6. Sicherheitsmodul (SM) nach Anspruch 1, wobei die Prüf-Logik (PL) eingerichtet ist, das Ähnlichkeitsmaß mit einem Schwellwert zu vergleichen, um so zu dem Ergebnis zu gelangen.

7. Sicherheitsmodul (SM) nach einem der vorangehenden Ansprüche, wobei das mindestens eine Merkmal basiert auf einem oder einer Kombination aus:
i) einer digitalen Signatur, ii) Metadaten, iii) einem Abhängigkeitsgraph von abhängigen Dateien, iv) Liste von aufgerufenen Funktionen; v) einem Benutzerinterface-Element.

8. Sicherheitsmodul (SM) nach einem der vorangehenden Ansprüche, weiter umfassend mindestens eine Benutzer- oder Administrator-Schnittstelle (UI), eingerichtet, um durch einen Benutzer oder Administrator ein Ausführen der Datei zu erzwingen, obwohl die Prüf-Logik (PI) zu dem Ergebnis kommt, dass keine Ähnlichkeit vorliegt.

9. Sicherheitsmodul (SM) nach einem der vorangehenden Ansprüche, wobei die Prüf-Logik (PL) eingerichtet ist als ein Maschineller-Lern-Algorithmus, basierend auf: i) lineares Model, ii) nichtlineares Modell, iii) nichtparametrisches Model, iv) Support Vector Machines ["SVM"], v) probabilistisches Model.

10. Ein Computersystem (CS) mit einem Sicherheitsmodul (SM) gemäß einem der vorangehenden Ansprüche.

11. Ein computer-implementiertes Verfahren, umfassend die Schritte:
Erfassen (S425) mindestens eines Merkmals einer Datei;
anhand mindestens eines Merkmals, überprüfen (S435, S440), ob die Datei eine Ähnlichkeit zu einer oder mehreren Referenzdateien aufweist, wobei die eine oder mehreren Referenzdateien als vertrauenswürdig eingestuft sind und wobei die Datei verschieden ist von den einen oder mehreren Referenzdateien;
Genehmigen (S450) einer Ausführung der Datei auf einem Computer-System nur dann, wenn die Überprüfung zu dem Ergebnis kommt, dass eine Ähnlichkeit zu der einen oder mehreren Referenzdateien vorliegt,
**dadurch gekennzeichnet, dass** das Überprüfung (S435, S440) der Ähnlichkeit durch eine Berechnung eines Ähnlichkeitsmaßes erfolgt, wobei das Ähnlichkeitsmaß eine Ähnlichkeit des mindestens einen Merkmals mit entsprechenden ein oder mehreren Merkmalen mindestens einer der Referenzdateien quantifiziert.

12. Verfahren nach Anspruch 11, umfassend den Schritt:
Im Vorfeld, ermitteln (S310, S320) der einen oder mehreren Referenzdateien durch eine Bestandsaufnahme auf dem Computer-System.

13. Verfahren nach Anspruch 11 oder 12, umfassend den Schritt:
vor dem Schritt des Überprüfens (S435, S440) der Ähnlichkeit, prüfen (S415, S420) einer Identität der Datei mit der einen oder mehreren Referenzdateien, und wobei die Ähnlichkeits-Überprüfung (S435, S440) nur dann erfolgt, wenn die Identitäts-Prüfung zu dem Ergebnis kommt, dass keine Identität vorliegt.

14. Verfahren nach einem der Ansprüche 11 bis 13, umfassend den Schritt:
Erzwingen (S570) eines Ausführens der Datei, obwohl in dem Überprüfungsschritt (S435, S440) keine Ähnlichkeit festgestellt wurde.

15. Ein Programelement, das, wenn es auf zumindest einem Datenverarbeitungssystem (CS) ausgeführt wird, das Datenverarbeitungssystem (CS) anleitet, das Verfahren gemäß einem der Ansprüche 11-14 durchzuführen.

16. Ein computerlesbares Medium, auf dem ein Programmelement gemäß Anspruch 15 gespeichert ist.

## Claims

1. A security module (SM) for a computer system (CS), comprising:
an input interface (IN2) for capturing at least one characteristic of a file;
a checking logic (PL) configured to check whether the file has a similarity to one or more reference files based on the at least one characteristic, wherein the one or more reference files are classified as trusted and wherein the file is different from the one or more reference files;
wherein the checking logic (PL) is further configured to authorize execution of the file on a computer system (CS) only if the check determines that there is a similarity to the one or more reference files, **characterized in that** the checking of similarity is done by calculating a similarity measure, which quantifies a similarity of the at least one characteristic with corresponding one or more characteristics of at least one of the reference files.

2. Security module (SM) according to claim 1, wherein the one or more reference files have been determined in advance by an inventory on the computer system (CS) by a file scanning unit (DSE).

3. Security module (SM) according to claim 1 or 2, wherein the checking logic (PL) is configured to declare the file as a new reference file if the result shows that such similarity exists.

4. Security module (SM) according to any one of the preceding claims, further comprising a further check logic (IDC) preceding the check logic (PL) and configured to check an identity of the file with the one or more reference files, and wherein the check by the check logic (PL) is only performed if the check by the further check logic (IDC) determines that no identity exists.

5. Security module (SM) according to claim 4, wherein the checking of identity is based on a hash value of the file and a hash value of the one or more reference files.

6. Security module (SM) according to claim 1, wherein the checking logic (PL) is configured to compare the similarity measure with a threshold value to arrive at the result.

7. Security module (SM) according to any one of the preceding claims, wherein the at least one characteristic is based on one or a combination of: i) a digital signature, ii) metadata, iii) a dependency graph of dependent files, iv) list of called functions; v) a user interface element.

8. Security module (SM) according to any one of the preceding claims, further comprising at least one user or administrator interface (UI), configured to allow a user or administrator to force execution of the file, although the checking logic (PI) determines that there is no similarity.

9. Security module (SM) according to any one of the preceding claims, wherein the checking logic (PL) is configured as a machine learning algorithm based on: i) linear model, ii) non-linear model, iii) non-parametric model, iv) support vector machines ["SVM"], v) probabilistic model.

10. A computer system (CS) with a security module (SM) according to any one of the preceding claims.

11. A computer-implemented method comprising the steps:
capturing (S425) at least one characteristic of a file;
checking (S435, S440) by means of at least one characteristic whether the file has a similarity to one or more reference files, wherein the one or more reference files are classified as trustworthy and wherein the file is different from the one or more reference files;
authorizing (S450) execution of the file on a computer system only if the checking determines that there is a similarity to the one or more reference files, **characterized in that**
the similarity check (S435, S440) is performed by a calculation of a similarity measure, wherein the similarity measure quantifies a similarity of the at least one characteristic with corresponding one or more characteristics of at least one of the reference files.

12. Method according to claim 11, comprising the step: in advance, determining (S310, S320) the one or more reference files by an inventory on the computer system.

13. Method according to claim 11 or 12, comprising the step: prior to the step of checking (S435, S440) similarity, checking (S415, S420) an identity of the file with the one or more reference files, and wherein the similarity checking (S435, S440) is performed only if the identity checking concludes that no identity exists.

14. Method according to any one of claims 11 to 13, comprising the step: forcing (S570) an execution of the file although no similarity was found in the checking step (S435, S440).

15. A program element which, when executed on at least one data processing system (CS), instructs the data processing system (CS) to perform the method according to one of claims 11 to14.

16. A computer-readable medium on which a program element according to claim 15 is stored.

## Revendications

1. Module de sécurité (SM) pour un système informatique (CS), comprenant :
une interface d'entrée (IN2) destinée à saisir au moins une caractéristique d'un fichier ;
une logique de contrôle (PL), laquelle est configurée pour vérifier, à l'aide de l'au moins une caractéristique, si le fichier présente une similitude par rapport à un ou plusieurs fichiers de référence, dans lequel les un ou plusieurs fichiers de référence sont approuvés et dans lequel le fichier est différent des un ou plusieurs fichiers de référence ;
dans lequel la logique de contrôle (PL) est en outre configurée pour n'autoriser une exécution du fichier sur un système informatique (CS) que si la vérification parvient à la conclusion qu'il existe une similitude par rapport aux un ou plusieurs fichiers de référence,
**caractérisé en ce que** la vérification de la similitude s'effectue par un calcul d'un degré de similitude, dans lequel le degré de similitude quantifie une similitude de l'au moins une caractéristique par rapport à une ou plusieurs caractéristiques correspondantes d'au moins un des fichiers de référence.

2. Module de sécurité (SM) selon la revendication 1, dans lequel les un ou plusieurs fichiers de référence ont au préalable été déterminés par un inventaire sur le système informatique (CS) par le biais d'une unité d'analyse de fichier (DSE).

3. Module de sécurité (SM) selon la revendication 1 ou 2, dans lequel la logique de contrôle (PL) est configurée pour déclarer le fichier à un nouveau fichier de référence, lorsque le résultat est qu'une telle similitude existe.

4. Module de sécurité (SM) selon l'une des revendications précédentes, comprenant en outre une logique de contrôle supplémentaire (IDC), laquelle est en amont de la logique de contrôle (PL), et est configurée pour contrôler une identité du fichier avec les un ou plusieurs fichiers de référence, et dans lequel la vérification par la logique de contrôle (PL) ne s'effectue que lorsque la logique de contrôle supplémentaire (IDC) parvient à la conclusion qu'il n'existe pas d'identité.

5. Module de sécurité (SM) selon la revendication 4, dans lequel la vérification l'identité s'effectue sur la base d'une valeur de hachage du fichier et d'une valeur de hachage des un ou plusieurs fichiers de référence.

6. Module de sécurité (SM) selon la revendication 1, dans lequel la logique de contrôle (PL) est configurée pour comparer le degré de similitude à une valeur seuil, afin d'arriver ainsi à la conclusion.

7. Module de sécurité (SM) selon l'une des revendications précédentes, dans lequel l'au moins une caractéristique se base sur un(e)/des ou une combinaison de : i) signature numérique, ii) métadonnées, iii) graphe de dépendance de fichiers dépendants, iv) liste de fonctions appelées ; v) élément d'interface utilisateur.

8. Module de sécurité (SM) selon l'une des revendications précédentes, comprenant en outre au moins une interface utilisateur ou administrateur (UI), configurée pour forcer une exécution du fichier par un utilisateur ou administrateur, alors même que la logique de contrôle (PI) parvient à la conclusion qu'il n'existe pas de similitude.

9. Module de sécurité (SM) selon l'une des revendications précédentes, dans lequel la logique de contrôle (PL) est configurée comme algorithme d'apprentissage automatique basé sur : i) un modèle linéaire, ii) un modèle non linéaire, iii) un modèle non paramétrique, iv) des séparateurs à vaste marge (« SVM »), v) un modèle probabiliste.

10. Système informatique (CS) comportant un module de sécurité (SM) selon l'une des revendications précédentes.

11. Procédé mis en œuvre par ordinateur, comprenant les étapes de :
saisie (S425) d'au moins une caractéristique d'un fichier ;
vérification(S435, S440), à l'aide de l'au moins une caractéristique, si le fichier présente une similitude par rapport à un ou plusieurs fichiers de référence, dans lequel les un ou plusieurs fichiers de référence sont approuvés et dans lequel le fichier est différent des un ou plusieurs fichiers de référence ;
dans lequel la logique de contrôle (S450) est en outre configurée pour n'autoriser une exécution du fichier sur un système informatique (CS) que si la vérification parvient à la conclusion qu'une similitude par rapport aux un ou plusieurs fichiers de référence existe,
**caractérisé en ce que** la vérification (S435, S440) de la similitude s'effectue par un calcul d'un degré de similitude, dans lequel le degré de similitude quantifie une similitude de l'au moins une caractéristique par rapport à une ou plusieurs caractéristiques correspondantes d'au moins un des fichiers de référence.

12. Procédé selon la revendication 11, comprenant l'étape de :
au préalable, détermination (S310, S320) des un ou plusieurs fichiers de référence par un inventaire sur le système informatique.

13. Procédé selon la revendication 11 ou 12, comprenant l'étape de :
avant l'étape de la vérification (S435, S440) de la similitude, contrôle d'une identité du fichier avec les un ou plusieurs fichiers de référence, et dans lequel la vérification de similitude (S435, S440) ne s'effectue que lorsque le contrôle d'identité parvient à la conclusion qu'il n'existe pas d'identité.

14. Procédé selon l'une des revendications 11 à 13, comprenant l'étape de :
forçage d'une exécution du fichier, alors même qu'aucune similitude n'est établie dans l'étape de vérification (S435, S440) .

15. Élément de programme qui, lorsqu'il est exécuté sur au moins un système de traitement de données (CS), mène le système de traitement de données (CS) à mettre en œuvre le procédé selon l'une des revendications 11-14.

16. Support lisible par ordinateur sur lequel est enregistré un élément de programme selon la revendication 15.
